# EUROPÄISCHE PATENTSCHRIFT

(11) **EP 2 931 477 B1**
(45) Veröffentlichungstag und Bekanntmachung des Hinweises auf die Patenterteilung: **07.09.2016**
(21) Anmeldenummer: 13805839.1
(22) Anmeldetag: 10.12.2013
(51) Int. Cl.: B25C 1/18

(54) **AUSZUGSTESTER FÜR EIN SETZGERÄT**
PULL-OUT TESTER FOR A SETTING TOOL
APPAREIL D'ESSAI D'EXTRACTION POUR APPAREIL DE POSE

(30) Priorität: 14.12.2012 DE 102012223157
(43) Veröffentlichungstag der Anmeldung: 21.10.2015
(73) Patentinhaber: Hilti Aktiengesellschaft, 9494 Schaan (LI)
(72) Erfinder: SCHWERTNER, Wolfram, CH-9475 Sevelen (CH); VON MONKIEWITSCH, Matthias, A-6900 Bregenz (AT); BOENIG, Stefan, 88147 Achberg-Esseratsweiler (DE); BRUGGMUELLER, Peter, A-6719 Bludesch (AT)
(74) Vertreter: Hilti Aktiengesellschaft Corporate Intellectual Property
(86) Internationale Anmeldenummer: PCT/EP2013/076075
(87) Internationale Veröffentlichungsnummer: WO 2014/090798

(56) Entgegenhaltungen:
- EP-A2- 1 213 099
- DE-A1- 19 604 158
- GB-A- 2 181 087
- KR-B1- 101 087 707

## Beschreibung

Die vorliegende Erfindung betrifft einen Auszugstester gemäß dem Oberbegriff des Anspruches 1, ein Setzgerät gemäß dem Oberbegriff des Anspruches 9 und ein Verfahren zum Setzen eines Setzbolzens in einen Setzgegenstand gemäß dem Oberbegriff des Anspruches 10.

Setzbolzen werden mit einem Setzgerät in einen Setzgegenstand eingesetzt, um mittels des Setzbolzens an dem Setzgegenstand ein Befestigungsteil befestigen zu können. Das Befestigungsteil ist beispielsweise eine abgehängte Decke und der Setzgegenstand eine Betondecke. Zur Befestigung der abgehängten Decke an der Betondecke in einem Gebäude ist es erforderlich, eine Vielzahl von Setzbolzen, im Allgemeinen aus Metall, insbesondere Stahl, an der Betondecke mit einem Setzgerät zu befestigen. Die von gesetzten Setzbolzen aufnehmbaren Auszugkräfte zum Tragen der abgehängten Decke sind unterschiedlich. Es kommt hierbei zu offensichtlichen und verdeckten Setzausfällen. Bei den offensichtlichen Setzausfällen ist es von außen optisch erkennbar, dass der Setzbolzen keine ausreichenden Zugkräfte aufnehmen kann. Bei verdeckten Setzausfällen ist es im Allgemeinen optisch von außen von einem Anwender nicht erkennbar, ob der Setzbolzen eine ausreichende Zugkraft zum Tragen der Decke übernehmen kann.

Es ist bereits bekannt, die maximal von den gesetzten Setzbolzen aufnehmbare Auszugkraft zu testen. Der Setzbolzen wird hierzu mit einer Auszugstestkraft auf Zugkraft beansprucht und bei einem verdeckten Setzausfall wird aufgrund der vorgegebenen Auszugstestkraft der Setzbolzen aus der Betondecke wieder herausgezogen und bei einem Setzbolzen mit einer ausreichenden Tragfähigkeit verbleibt der Setzbolzen auch bei der Beanspruchung mit der Auszugstestkraft innerhalb des Setzgegenstandes als der Betondecke, sodass der Setzbolzen eine ausreichende Tragfähigkeit bzw. ausreichende Fähigkeit zur Aufnahme von Zugkräften aufweist. Hierzu werden Kunststoffschnapper eingesetzt, die verformt werden. Die Kunststoffschnapper weisen jedoch eine große thermische Beeinflussung auf, sodass bei unterschiedlichen Temperaturen auch stark unterschiedliche Auszugstestkräfte auftreten. Der Bereich der Auszugstestkraft muss dabei jedoch so gewählt werden, dass eine ausreichende Auszugstestkraft in sämtlichen Bereichen vorliegt. Dadurch werden Setzbolzen jedoch bei den größeren Auszugstestkräften auf größere Zugkräfte geprüft und dadurch werden auch Setzbolzen aus der Betondecke wieder herausgezogen, obwohl diese eine ausreichende Zugkraft aufweisen. Es tritt eine Deformation und ein Zerreißen des Kunststoffteils bzw. des Kunststoffschnappers auf, sodass auch die Ausziehgeschwindigkeit einen Einfluss auf die Auszugstestkraft aufweist. Je größer die Temperatur und je langsamer die Auszuggeschwindigkeit ist, desto kleiner ist die Auszugstestkraft. Die minimale Auszugstestkraft tritt somit bei der maximalen Einsatztemperatur und der minimalen Auszuggeschwindigkeit auf. Bei der minimalen Auszugstestkraft muss jedoch noch eine ausreichende Zugkraft des Setzbolzens vorhanden sein, sodass bei geringeren Temperaturen und bei größeren Auszuggeschwindigkeiten die Setzbolzen auf größere Auszugkräfte getestet werden, als es erforderlich ist. Dadurch werden mehr gesetzte Setzbolzen als Setzausfälle eingestuft und aus der Betondecke herausgezogen als tatsächlich erforderlich.

Aus der DE 196 04 158 A1 ist eine Vorrichtung zur Prüfung der Haltekraft von Befestigungselementen in einem Untergrund bekannt. Diese Vorrichtung weist einen zylinderförmigen Kupplungsbereich mit einem Schlitz und beidseits des Schlitzes angeordneten Vorsprüngen auf. Beim Einführen des Kupplungsbereichs in eine Hohlbohrung eines Befestigungselements federn die Vorsprünge ein, so dass eine Reibkraft bewirkt ist, welche beim Abziehen des Kupplungsbereichs von dem Befestigungselement von der Haltekraft des Befestigungselements überwunden werden muss. Befestigungselemente mit zu geringer Haltekraft sollen dadurch aus dem Untergrund herausgezogen werden.

Die Aufgabe der vorliegenden Erfindung besteht darin, einen Auszugstester, ein Setzgerät und ein Verfahren zum Setzen eines Setzbolzens in einen Setzgegenstand zur Verfügung zu stellen, bei dem eine im Wesentlichen konstante Auszugstestkraft auch bei unterschiedlichen Temperaturen und einer unterschiedlichen Auszuggeschwindigkeit des Auszugstesters zur Verfügung gestellt werden kann.

Diese Aufgabe wird gelöst mit einem Auszugstester für ein Setzgerät zum Setzen eines Setzbolzens, umfassend ein Halteteil zum Halten des Setzbolzens, ein elastisches Element, wenigstens ein Mittel zum Übertragen einer auf den Setzbolzen wirkenden Auszugkraft auf das elastische Element, so dass bei einem Überschreiten einer auf den Setzbolzen wirkenden Auszugstestkraft aufgrund einer Verformung des elastischen Elementes die Verbindung zwischen dem Setzbolzen und dem Auszugstester lösbar ist, wobei, die auf das elastischen Element übertragenen Kraft zur Verformung des elastischen Elementes im Wesentlichen eine elastische Verformung des elastischen Elementes bedingt und aufgrund der im Wesentlichen elastischen Verformung des elastischen Elementes die Verbindung zwischen dem Setzbolzen und dem Auszugstester lösbar ist. An dem elastischen Element tritt somit eine im Wesentlichen elastische Verformung auf und keine im Wesentlichen plastische Verformung auf. Die im Wesentlichen elastische Verformung bedingt das Lösen der Verbindung zwischen dem Setzbolzen und dem Auszugstester. Dadurch ist die Auszugstestkraft im Wesentlichen konstant auch bei unterschiedlichen Temperaturen und bei einer unterschiedlichen Ausziehgeschwindigkeit des Auszugstesters. Das elastische Element besteht dabei aus einem Material, bei welchem die Federkonstante des elastischen Elements im Wesentlichen temperaturunabhängig ist, d. h. die Federkonstante weist bei Temperaturen zwischen -20° C und +40° C einen Unterschied von weniger als 20%, 10%, 5% oder 3% auf. Ferner hat bei einem elastischen Element die Geschwindigkeit der Verformung des elastischen Elements keinen Einfluss oder im Wesentlichen keinen Einfluss auf die Federkonstante des elastischen Elements. Dadurch kann auch bei unterschiedlichen Umgebungstemperaturen, das heißt bei unterschiedlichen Temperaturen und bei einer unterschiedlichen Auszuggeschwindigkeit die im Wesentlichen gleiche und konstante Auszugstestkraft von dem Auszugstester zur Verfügung gestellt werden. Die Auszugstestkraft kann somit dahingehend bemessen sein, zum Beispiel von 0,15 kN, vorzugsweise zwischen 0,05 kN und 0,5 kN, und sodass diese verdeckte Setzausfälle an den Setzbolzen erfasst und bei größeren Kräften als der im Wesentlichen konstanten Auszugstestkraft die Verbindung zwischen dem Setzbolzen und dem Auszugstester lösbar ist bzw. gelöst wird, sodass dadurch der Setzbolzen in dem Setzgegenstand verbleibt und somit zur Aufnahme von Befestigungsteilen, beispielsweise einer abgehängten Decke, eingesetzt werden kann. Dadurch werden in vorteilhafter Weise von dem Auszugstester nur diejenigen Setzbolzen aus dem Setzgegenstand entfernt, welche keine ausreichenden Zugkräfte aufnehmen können, das heißt, bei denen ein verdeckter Setzausfall auftritt.

In einer zusätzlichen Ausführungsform ist das elastische Element dahingehend ausgebildet, dass die Verformung des elastischen Elementes zu wenigstens 80 %, 90 % und 95 % eine elastische Verformung ist.

In einer ergänzenden Variante besteht das elastische Element wenigstens teilweise, insbesondere vollständig, aus Metall. Metall, beispielsweise Eisen, weist bei unterschiedlichen Temperaturen eine im Wesentlichen konstante Federkonstante auf.

Zweckmäßig ist das elastische Element eine Feder, insbesondere eine Drehfeder oder Druckfeder, und/oder das Halteteil ist eine Haltehülse.

In einer zusätzlichen Ausführungsform steht das Halteteil in mechanischer Verbindung mit wenigstens einem Übertragungsteil, insbesondere Hebel, und die Haltekraft an dem Halteteil auf das Übertragungsteil wirkt, so dass mittels einer Bewegung, insbesondere Schwenkbewegung, des Übertragungsteils, insbesondere des Hebels, das elastische Element verformbar ist. An dem Halteteil, insbesondere einer Verbindungsöffnung an dem Halteteil, ist der Setzbolzen befestigt, vorzugsweise formschlüssig. Die von dem Halteteil auf den Setzbolzen übertragene Zugkraft als Auszugstestkraft wird auf das wenigstens eine Übertragungsteil, insbesondere den Hebel oder einen Mechanismus, beispielsweise mit einem Zahnrad, übertragen, sodass dadurch die Zugkraft an dem Setzbolzen als Auszugstestkraft eine Bewegung des wenigstens einen Übertragungsteils bedingt und die Bewegung des Übertragungsteils von dem elastischen Element behindert ist, indem die von dem elastischen Element auf das Übertragungsteil übertragenen Kraft der Bewegung entgegengesetzt gerichtet ist. Je größer die auf den Setzbolzen wirkende Zugkraft ist, desto größer ist die Bewegung des Übertragungsteils und umgekehrt. Bei einem Überschreiten einer Grenzposition des Übertragungsteils bei der Auszugstestkraft wird eine Verbindung, insbesondere form- und/oder kraftschlüssige Verbindung, aufgrund der Bewegung des Übertragungsteils gelöst. Dadurch ist die Verbindung zwischen dem Setzbolzen und dem Auszugstester bei einem Überschreiten der Auszugstestkraft lösbar.

In einer ergänzenden Ausgestaltung ist das Halteteil mit dem wenigstens einen Übertragungsteil mit wenigstens einem Verbindungsteil, insbesondere zwei Verbindungsarmen, mechanisch verbunden, so dass die Auszugkraft von dem Halteteil auf das Übertragungsteil mit dem wenigstens einen Verbindungsteil übertragbar ist und/oder das Übertragungsteil und/oder das Verbindungsteil das wenigstens ein Mittel zum Übertragen einer auf den Setzbolzen wirkenden Auszugkraft auf das elastische Element bildet. Das Übertragungsteil und das Verbindungsteil stellen somit ein Mittel zum Übertragen der auf den Setzbolzen wirkenden Auszugkraft auf das elastische Element dar und bilden somit einen Mechanismus zum Übertragen der Zugkraft an dem Setzbolzen auf das elastische Element.

In einer ergänzenden Variante bildet das Halteteil das elastische Element und/oder das Halteteil das wenigstens eine Mittel zum Übertragen einer auf den Setzbolzen wirkenden Auszugkraft auf das elastische Element bildet und/oder das Halteteil ist als ein im Wesentlichen U-förmiger Halteclip ausgebildet. Der im Wesentlichen U-förmige Halteclip bildet somit eine Feder als elastisches Element. Ferner bildet der Halteclip auch das Halteteil zum Halten des Setzbolzens, sodass dadurch das Halteteil auch das Mittel zum Übertragen einer auf den Setzbolzen wirkenden Zugkraft auf das elastische Element bildet, da es dieses auch selbst darstellt.

In einer ergänzenden Ausführungsform ist an dem übrigen Auszugstester eine Formschlussgeometrie, insbesondere ein Vorsprung oder eine Nut, ausgebildet, an welcher das Halteteil formschlüssig befestigt ist und bei einem Überschreiten einer auf das Halteteil wirkenden Auszugstestkraft die formschlüssige Verbindung zwischen dem Halteteil und der Formschlussgeometrie lösbar ist aufgrund einer im Wesentlichen elastischen Verformung des Halteteils als elastisches Element, insbesondere aufgrund der Geometrie des Halteteils. Das Halteteil weist hierzu beispielsweise einen schrägen Abschnitt auf und dadurch tritt aufgrund dieser Geometrie des Halteteils in Abhängigkeit von der an dem Setzbolzen wirkenden Zugkraft eine Verformung des Halteteils auf und diese Verformung ist umso größer, je größer die auf den Setzbolzen wirkende Zugkraft ist und umgekehrt, sodass ab einer bestimmten Grenzverformung bzw. Grenzposition des Halteteils die Verbindung, insbesondere form- und/oder kraftschlüssige, Verbindung zwischen dem Halteteil und der Formschlussgeometrie lösbar ist bzw. gelöst wird.

Ebenfalls gelöst ist die Aufgabe bei einem Setzgerät, umfassend ein Gehäuse, eine Einrichtung, z. B. einen Schlagbolzen mit einem Antriebsmittel, z. B. eine pyrotechnische, insbesondere feste, flüssige oder gasförmige Treibladung, für den Schlagbolzen, zum Einbringen eines Setzbolzens in einen Setzgegenstand, ein Betätigungsorgan, z. B. einen Schalter, zum Aktivieren der Einrichtung, insbesondere des Antriebsmittels, wobei das Setzgerät einen Auszugstester wie hier beschrieben umfasst, insbesondere der Auszugstester an dem übrigen Setzgerät angebaut oder integriert ist und/oder ein hier beschriebenes Verfahren ausführbar ist.

In einer zusätzlichen Ausführungsform ist das Antriebsmittel eine Feder, welche von einem Elektromotor spannbar ist zum Bewegen bzw. Schlagen des Schlagbolzens oder eine Brennkammer zum Bewegen oder Schlagen des Schlagbolzens oder ein Druckluftkolben, welcher von Druckluft beaufschlagbar ist zum Bewegen oder Schlagen des Schlagbolzens.

Erfindungsgemäßes Verfahren zum Setzen eines Setzbolzens in einen Setzgegenstand, insbesondere mit einem in dieser Schutzrechtsanmeldung beschriebenen Setzgerät, mit den Schritten: Setzen des Setzbolzens in den Setzgegenstand, z. B. eine Betondecke, Aufbringen einer Auszugstestkraft auf den Setzbolzen und die Auszugstestkraft auf ein elastisches Element übertragen wird, so dass das elastische Element elastisch vorformt wird, wobei aufgrund der elastischen Verformung, insbesondere im Wesentlichen elastischen Verformung, des elastischen Elementes eine mittelbare oder unmittelbare Verbindung, insbesondere formschlüssige und/oder kraftschlüssige Verbindung, zwischen dem Setzbolzen und dem Setzgerät bei dem Überschreiten der auf den Setzbolzen wirkenden Auszugstestkraft gelöst wird.

Zweckmäßig wird bei einer auf den Setzbolzen wirkenden Auszugkraft unterhalb der Auszugstestkraft die Verbindung zwischen den Setzbolzen und dem Setzgerät erhalten.

In einer zusätzlichen Ausführungsform wird nach dem Lösen der Verbindung zwischen dem Setzbolzen und dem Setzgerät von dem elastischen Element eine im Wesentlichen vollständige elastische Rückverformung ausgeführt und/oder das elastische Element wird im Wesentlichen elastisch, insbesondere zu wenigstens 80 %, 90 % oder 95 % elastisch, verformt und/oder an dem elastischen Element wird im Wesentlichen keine plastische Verformung ausgeführt, z. B. weniger als 20%, 10% oder 5% plastisch verformt.

In einer weiteren Ausgestaltung wird als elastisches Element eine Feder, insbesondere Drehfeder, verformt und vorzugsweise besteht die Feder wenigstens teilweise, insbesondere vollständig, aus Metall.

Vorzugsweise wird die Auszugstestkraft von einem Halteteil mittelbar oder unmittelbar auf ein Übertragungsteil, insbesondere einen Hebel, übertragen, so dass das Übertragungsteil bewegt, insbesondere der Hebel verschwenkt wird.

In einer zusätzlichen Variante ist das Übertragungsteil mit dem elastischen Element, insbesondere der Drehfeder, mechanisch verbunden, so dass aufgrund der Bewegung, insbesondere Verschwenkung, des Übertragungsteils das elastische Element elastisch verformt wird.

Im Nachfolgenden werden Ausführungsbeispiele der Erfindung unter Bezugnahme auf die beigefügten Zeichnungen näher beschrieben. Es zeigt:
- Fig. 1: eine perspektivische Ansicht eines Auszugstesters in einem ersten Ausführungsbeispiel ohne ein Halteteil für einen Setzbolzen,
- Fig. 2: eine perspektivische Ansicht des Auszugstesters gemäß Fig. 1 mit dem Halteteil,
- Fig. 3: einen Längsschnitt des Auszugstesters gemäß Fig. 1 ohne Halteteil und ohne Setzbolzen,
- Fig. 4: einen Längsschnitt des Auszugstesters gemäß Fig. 1 mit dem Halteteil und mit dem Setzbolzen vor dem Setzen des Setzbolzens in einen Setzgegenstand,
- Fig. 5: einen Längsschnitt des Auszugstesters gemäß Fig. 1 mit dem Halteteil und mit dem Setzbolzen nach dem Setzen des Setzbolzens in den Setzgegenstand,
- Fig. 6: eine perspektivische Ansicht des Auszugstesters in einem zweiten Ausführungsbeispiel mit dem Halteteil vor dem Setzen des Setzbolzens,
- Fig. 7: eine perspektivische Ansicht des Auszugstesters gemäß Fig. 6 mit dem Halteteil nach dem Setzen des Setzbolzens ohne eine Darstellung des Setzgegenstandes,
- Fig. 8: einen Längsschnitt des Auszugstesters gemäß Fig. 6 mit dem Halteteil vor dem Setzen des Setzbolzens,
- Fig. 9: einen Längsschnitt des Auszugstesters gemäß Fig. 7 mit dem Halteteil nach dem Setzen des Setzbolzens und einer Darstellung des Setzgegenstandes und
- Fig. 10: eine Seitenansicht eines Setzgerätes mit dem Auszugstester.

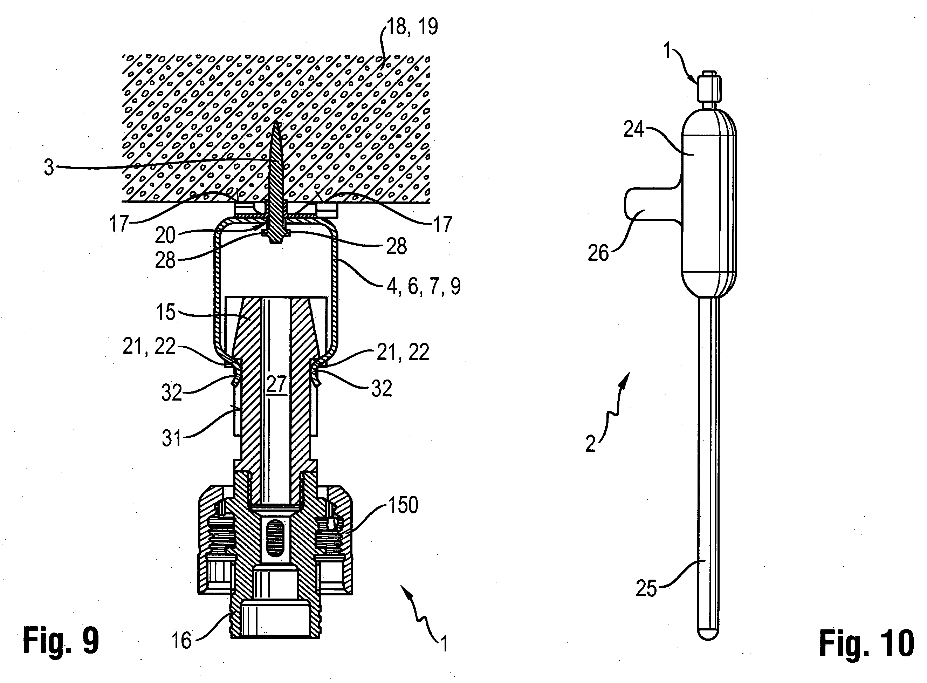

Ein in Fig. 10 dargestelltes Setzgerät 2 dient dazu, Setzbolzen 3 bzw. ein Setzelement 3 mit dem Setzgerät 2 in einen Setzgegenstand 18, beispielsweise eine Betondecke 19 einzutreiben bzw. zu setzen. Hierzu weist das Setzgerät 2 ein Gehäuse 24 auf, an welchem auch ein Haltegriff 26 ausgebildet ist zum Halten des Setzgerätes 2. Innerhalb des Gehäuses 24 des Setzgerätes 2 ist eine nicht dargestellte Einrichtung zum Einbringen bzw. Setzen des Setzbolzens 3 in die Betondecke 19 ausgebildet. Beispielsweise ist die Einrichtung ein Schlagbolzen, welcher von einer pyrotechnischen Treibladung angetrieben wird und dadurch mittels des Schlagbolzens der Setzbolzen 3 bzw. das Setzelement 3 in den Setzgegenstand 18 eingetrieben wird. Dabei werden die Setzbolzen 3 in die Betondecke 19 eingetrieben, sodass das Setzgerät 2 bevorzugt mit einer Haltestange 25 zum Halten des Setzgerätes 2 an den Betondecke 19 ausgebildet ist. Besonders bevorzugt ist die Haltestange 25 als Auslösestange ausgebildet und überträgt ein Auslösesignal insbesondere mechanisch auf das Setzgerät 2. An das Setzgerät 2 ist ein Auszugstester 1 angebaut oder integriert.

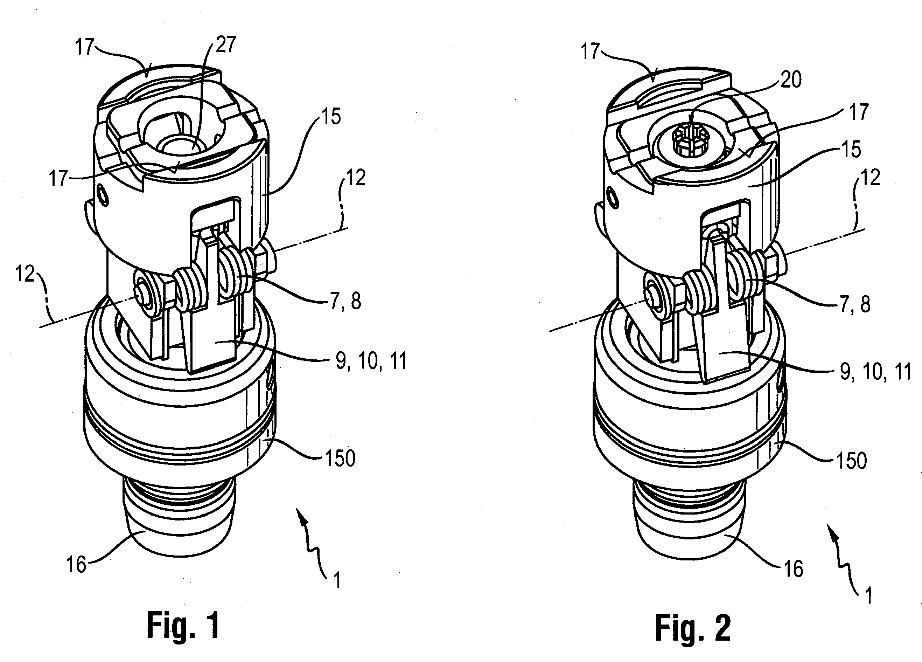

In den Fig. 1 bis 5 ist ein erstes Ausführungsbeispiel des Auszugstesters 1 dargestellt. Der Auszugstester 1 weist ein Auszugstestergehäuse 15 mit einer Überwurfmutter 150 aus Metall oder Kunststoff sowie eine die Vorwärtsbewegung eines Setzkolbens dämpfende Kolbenbremse 16 zur Verbindung des Auszugstesters 1 mit dem Setzgerät 2 bzw. dem übrigen Setzgerät 2 auf. An einem ersten axialen Ende des Auszugstesters 1 weist dieses einen Anschlag 17 zum Auflegen auf die Betondecke 19 oder ein Zusatzteil des zu setzenden Befestigungselements auf und an einem zweiten axialen Ende des Auszugstesters 1 ist die Kolbenbremse 16 ausgebildet. Das Auszugstestergehäuse 15 weist eine Bolzenkammer 27 zur Aufnahme des Setzbolzens 3 auf, welcher an einem Halteteil 4 als Haltehülse 5 befestigt ist.

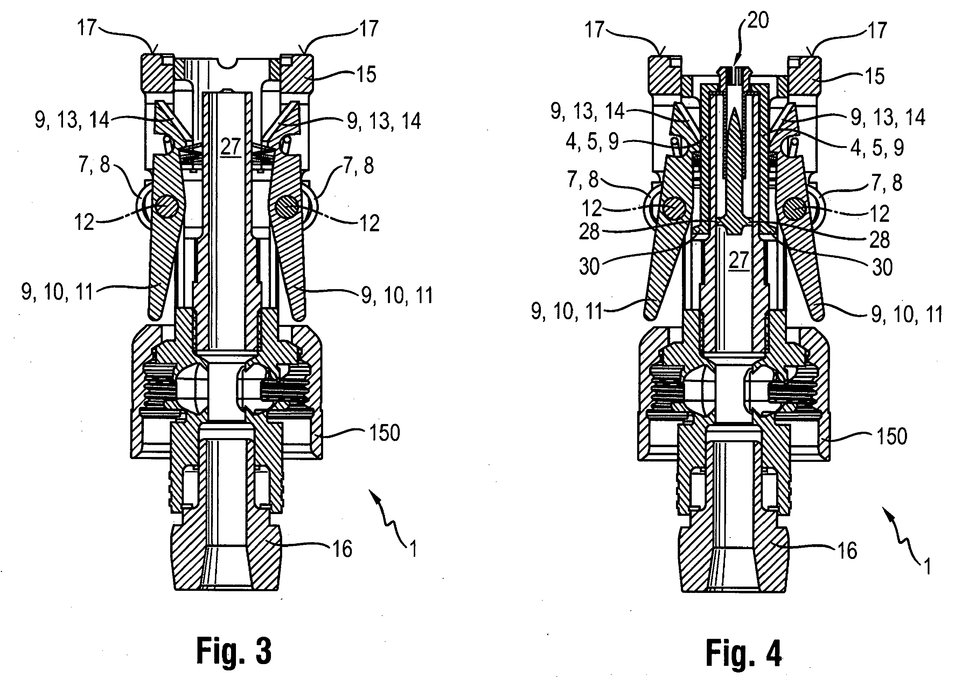

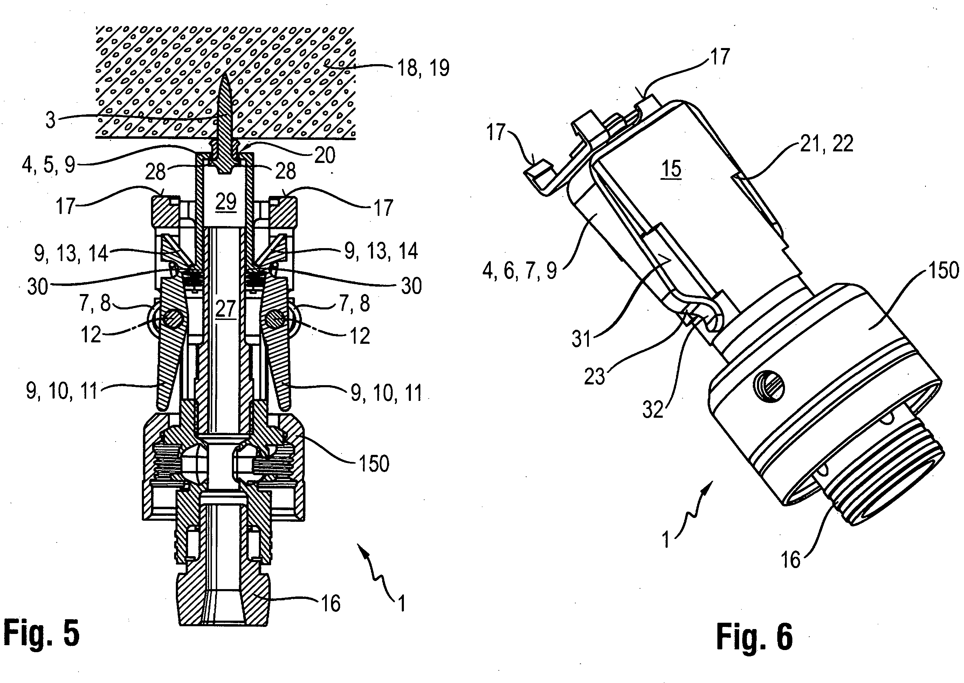

In Fig. 1 und 3 ist der Auszugester 1 ohne den Setzbolzen 3 und ohne die Haltehülse 5 dargestellt. In Fig. 4 ist der Setzbolzen 3 an der Haltehülse 5 in die Bolzenkammer 27 eingeführt, sodass dadurch mittels des Setzgerätes 2 der Setzbolzen 3 in die Betondecke 19 gesetzt werden kann. In Fig. 5 ist der Setzbolzen 3 bereits in der Betondecke 19 gesetzt und mittels des Halteteils 4 als rohrförmige Haltehülse 5 kann auf den Setzbolzen 3 eine Auszugkraft aufgebracht werden. Das Halteteil 4 weist eine Verbindungsöffnung 20 auf und der Durchmesser der Verbindungsöffnung 20 ist kleiner als der Durchmesser eines Tragringes 28 an einem der Spitze des Setzbolzens 3 gegenüber liegenden axialen Ende des Setzbolzens 3. Bei Verwendung einer Beilagscheibe ist auch ein grösserer Durchmesser für die Verbindungsöffnung möglich.

Vor dem Setzen des Setzbolzens 3 ist der Setzbolzen 3 innerhalb eines von der Haltehülse 5 umschlossenen Innenraums 29 angeordnet (Fig. 4) und nach dem Setzen des Setzbolzens 3 ist der Setzbolzen 3 im Wesentlichen außerhalb des von der Haltehülse 5 eingeschlossenen Innenraums 29 angeordnet und lediglich ein Endbereich mit dem Tragring 28 verbleibt in dem Innenraum 29. Durch das Aufbringen einer Auszugkraft nach unten auf die Überwurfmutter 150 kann dadurch auf den Setzbolzen 3 eine Auszugkraft aufgebracht werden, da diese von dem übrigen Auszugstester 1 auf die Haltehülse 5 übertragen wird und von der Haltehülse 5 auf den Setzbolzen 3.

An dem Auszugstestergehäuse 15 sind um eine Schwenkachse 12 zwei Hebel 11 als Übertragungsteile 10 verschwenkbar gelagert. Die beiden Hebel 11 stehen dabei in mechanischer und kinematischer Verbindung mit einem elastischen Element 7 als Drehfeder 8 aus Metall. Jedem der beiden Hebel 11 ist jeweils eine Drehfeder 8 zugeordnet, sodass eine Schwenkbewegung des Hebels 11 eine elastische Drehverformung der Drehfeder 8 aus Metall bedingt. An dem in Fig. 4 und 5 unten dargestellten axialen Ende der Haltehülse 5, welches gegenüberliegend zu der Verbindungsöffnung 20 ausgebildet ist, ist ein Stützring 30 ausgebildet. Nach dem Setzen des Setzbolzens 3 und auch dem Herausbewegen der Haltehülse 5 aus der Bolzenkammer 27 liegt der Stützring 30 auf zwei Verbindungsarmen 14 als Verbindungsteilen 13 auf. Die auf den Setzbolzen 3 wirkende Auszugkraft, welche auch an der Haltehülse 5 vorhanden ist, bedingt dadurch eine Übertragung dieser Kraft auf die beiden Hebel 11, da die beiden Verbindungsarme 14 auf den Hebeln 11 aufliegen. Die beiden Drehfedern 8 bringen dabei bei einer Schwenkbewegung der Hebel 11 um die Schwenkachse 12 eine Kraft auf die Hebel 11 auf, welche der Schwenkbewegung der Hebel 11 entgegengesetzt gerichtet ist. Je größer somit die auf den Setzbolzen 3 wirkende Auszugkraft ist, desto größer ist die Schwenkbewegung der Hebel 11 um die Schwenkachse 12. Dabei werden die Verbindungsarme 14 aufgrund einer entsprechenden Verbindung mit den Hebeln 11 mitbewegt, sodass ab einer Grenzschwenkposition der Hebel 11 die formschlüssige Verbindung zwischen dem Stützring 30 der Haltehülse 5 und den beiden Verbindungsarmen 14 gelöst wird, da aufgrund der Schwenkbewegung der Hebel 11 diese Schwenkbewegung auch eine radiale Bewegung nach außen bezüglich einer Längsachse des Auszugstesters 1 bedingt und dadurch die Verbindungsarme 14 nicht mehr auf dem Stützring 30 der Haltehülse 5 aufliegen.

Der Mechanismus bzw. das kinematische System des Auszugstesters 1 ist dabei dahingehend ausgelegt, dass bei einer auf den Setzbolzen 3 wirkenden Auszugstestkraft von 0,05 kN, 0,1 kN, 0,15 kN, 0,3 kN oder 0,5 kN die formschlüssige Verbindung zwischen den Verbindungsarmen 14 und dem Stützring 30 an der Haltehülse 5 gelöst wird. Dadurch kann der übrige Auszugstester 1 von der Haltehülse 5 wegbewegt werden, sodass nur noch der Setzbolzen 3 mit der Haltehülse 5 an der Betondecke 19 verbleibt. Ist die von dem Setzbolzen 3 aufnehmbare Auszugkraft kleiner als die Auszugstestkraft von beispielsweise 0,15 kN, wird der Setzbolzen 3 aus der Betondecke 19 herausgezogen, sodass ein Setzausfall des Setzbolzens 3 vorliegt und dieser nicht geeignete Setzbolzen 3 auch von der Betondecke 19 herausgezogen wird. Der Hebel 11 und die beiden Verbindungsarme 14 stellen somit ein Mittel 9 zum Übertragen einer Kraft als Zugkraft an dem Setzbolzen 3 auf das elastische Element 7 als Drehfeder 8 dar. Dabei ist die elastische Verformung, das heißt die elastische Drehbewegung der Drehfeder 8 im Wesentlichen nicht von der Temperatur und auch nicht von der Ausziehgeschwindigkeit mit dem Auszugstester 1 abhängig. Die Drehfeder 8 ist aus Metall ausgebildet, sodass dadurch die Federkonstante der Drehfeder 8 auch bei unterschiedlichen Temperaturen im Wesentlichen konstant ist. Insbesondere ist dabei die Drehfeder 8 als eine Stahlfeder ausgebildet. Die Auszugkraft, welche auf den Setzbolzen 3 aufgebracht wird, wird entweder mittels Muskelkraft von einem Anwender aufgebracht, beispielsweise auf die Haltestange 25, da der Auszugstester 1 mit dem übrigen Setzgerät 2 verbunden ist oder die Auszugkraft wird aufgrund eines Rücksprungs des Setzgeräts 2 nach bzw. beim Setzen des Setzbolzens 3 aufgebracht oder einer Kombination aus beidem.

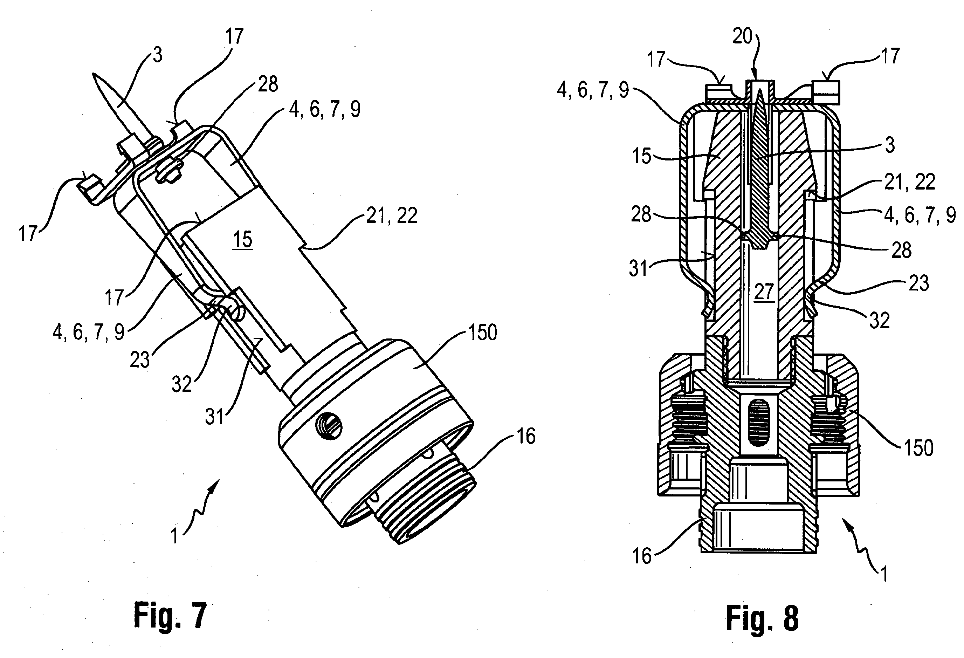

In den Fig. 7 bis 9 ist ein zweites Ausführungsbeispiel des Auszugstesters 1 dargestellt. Im Nachfolgenden werden im Wesentlichen nur die Unterschiede zu dem ersten Ausführungsbeispiel gemäß Fig. 1 bis 5 beschrieben. Vor dem Setzen des Setzbolzens 3 ist der Setzbolzen 3 innerhalb der Bolzenkammer 27 an dem Auszugstestergehäuse 15 angeordnet und ein im Wesentlichen U-förmiger Halteclip 6 aus Metall, insbesondere Stahl, liegt auf einem mittelbaren Anschlag 17 des Auszugstestergehäuses 15 auf (Fig. 8). An einem der Verbindungsöffnung 20 des Halteclips 6 als Halteteil 4 gegenüberliegenden Endbereich weist der Halteclip 6 eine Rastnase 32 auf. Beim Setzen des Setzbolzens 3 mittels des Setzgerätes 2 wird der Setzbolzen 3 aus der Bolzenkammer 27 herausbewegt und in die Betondecke 19 eingetrieben (Fig. 9). Ferner wird aufgrund des Tragringes 28 auch der Halteclip 6 von der in Fig. 8 dargestellten Position in Richtung zu der Betondecke 19 bewegt, sodass während dieser Bewegung die Rastnase 32 an einer Gleitfläche 31 des Auszugstestergehäuses 15 bis zu einer Formschlussgeometrie 21 als Vorsprung 22 sich bewegt. Im zweiten Ausführungsbeispiel bildet somit der Halteclip 6 sowohl das Halteteil 4 als auch das Mittel 9 zum Übertragen der auf den Setzbolzen 3 wirkenden Auszugskraft. Außerdem bildet der Halteclip 6 auch das elastische Element 7 als Feder aus Stahl.

In der in Fig. 9 dargestellten Position des Halteclips 6 kann von dem Vorsprung 22 des Auszugstestergehäuses 15 auf die Rastnase 32 eine Zugkraft aufgebracht werden, da der Halteclip 6 auch ein elastisches Element 7 als Feder bildet und die beiden Rastnasen 32 auf dem Vorsprung 22 unter einer Druckkraft aufliegen. Es ist somit eine form- und kraftschlüssige Verbindung zwischen dem Halteclip 6 und dem Auszugstestergehäuse 15 vorhanden. Dabei weist der Halteclip 6 im Bereich der Rastnase 32 einen schrägen Abschnitt 23 auf, sodass je größer die mittels des Halteclips 6 auf den Setzbolzen 3 übertragene Zugkraft ist, die Rastnasen 32 des Halteclips 6 radial entgegen einer elastischen Federwirkung des Halteclips 6 bewegt werden, sodass ab einer Auszugstestkraft von beispielsweise 0,15 kN die Rastnasen 32 von der Formschlussgeometrie 21 abgleiten und dadurch das Auszugstestergehäuse 15 von dem Halteclip 6 an dem Setzbolzen 3 abgezogen werden kann. Aufgrund der Ausbildung des Halteelements 6 aus Stahl, ist die Auszugstestkraft von 0,15 kN auch bei unterschiedlichen Temperaturen im Wesentlichen konstant.

Die Haltehülse 5 in dem ersten Ausführungsbeispiel als auch der Halteclip 6 in dem zweiten Ausführungsbeispiel können nach einem erfolgreichen Auszugstest, das heißt dem Wegziehen des Auszugstesters 5, sodass lediglich der Setzbolzen 3 mit dem Halteteil 4 an der Betondecke 19 verbleibt, von dem Setzbolzen 3 entfernt werden. Hierzu weist das Halteteil 4 ein entsprechendes Labyrinth auf, sodass dadurch nach dem Auszugstest das Halteteil 4 von dem Setzbolzen 3 entfernt werden kann, soweit erforderlich. Bevorzugt verbleibt jedoch das Halteteil 4 nach dem erfolgreichen Auszugstest auch an dem Setzbolzen 3.

Insgesamt betrachtet sind mit dem erfindungsgemäßen Auszugstester 1 und dem erfindungsgemäßen Setzgerät 2 wesentliche Vorteile verbunden. Der Auszugstester 1 ist an dem Setzgerät 2 angebaut. Nach dem Setzen des Setzbolzens 3 kann mit dem Auszugester 1 die von dem Setzbolzen 3 aufnehmbare Auszugkraft geprüft bzw. getestet werden, sodass bei einer geringeren als der vorgegebenen Auszugstestkraft von beispielsweise 0,15 kN der Setzbolzen 3 aus der Betondecke 19 herausgezogen wird und dadurch ein Setzausfall einfach und zuverlässig erkannt werden kann. Bei einer Auszugkraft des Setzbolzens 3, die von diesem aufnehmbar ist, welche größer ist als die Auszugstestkraft von 0,15 kN, verbleibt der Setzbolzen 3 in dem Setzgegenstand 18, da ab der Auszugstestkraft von 0,15 kN die Verbindung zwischen dem Setzbolzen 3 und dem Auszugstester 1, das heißt zwischen dem Halteteil 4 und dem übrigen Auszugstester 1, insbesondere dem Auszugstestergehäuse 15, gelöst wird. Die Auszugstestkraft ist dabei im Wesentlichen nicht von der Umgebungstemperatur und der Auszugstestgeschwindigkeit des Auszugstestergehäuses 15 weg von der Betondecke 19 abhängig, da die elastische Verformung des elastischen Elements 7 aus Metall, insbesondere Stahl, im Wesentlichen nicht von der Temperatur und Verformungsgeschwindigkeit abhängig ist.

## Patentansprüche

1. Auszugstester (1) für ein Setzgerät (2) zum Setzen eines Setzbolzens (3), umfassend
- ein Halteteil (4) zum Halten des Setzbolzens (3),
- ein elastisches Element (7),
- wenigstens ein Mittel (9) zum Übertragen einer auf den Setzbolzen (3) wirkenden Auszugkraft auf das elastische Element (7),
**dadurch gekennzeichnet, dass** bei einem Überschreiten einer auf den Setzbolzen (3) wirkenden Auszugstestkraft aufgrund einer Verformung des elastischen Elementes (7) die Verbindung zwischen dem Setzbolzen (3) und dem Auszugstester (1) lösbar ist,
wobei die auf das elastische Element (7) übertragene Kraft zur Verformung des elastischen Elementes (7) im Wesentlichen eine elastische Verformung des elastischen Elementes (7) bedingt und aufgrund der im Wesentlichen elastischen Verformung des elastischen Elementes (7) die Verbindung zwischen dem Setzbolzen (3) und dem Auszugstester (1) lösbar ist.

2. Auszugstester nach Anspruch 1,
**dadurch gekennzeichnet, dass**
das elastische Element (7) dahingehend ausgebildet ist, dass die Verformung des elastischen Elementes (7) zu wenigstens 80%, 90% und 95% eine elastische Verformung ist.

3. Auszugstester nach Anspruch 1 oder 2,
**dadurch gekennzeichnet, dass**
das elastische Element (7) wenigstens teilsweise, insbesondere vollständig, aus Metall besteht.

4. Auszugstester nach einem oder mehreren der vorhergehenden Ansprüche,
**dadurch gekennzeichnet, dass**
das elastische Element (7) eine Feder, insbesondere eine Drehfeder (8), ist
und/oder
das Halteteil (4) eine Haltehülse (5) ist.

5. Auszugstester nach einem oder mehreren der vorhergehenden Ansprüche,
**dadurch gekennzeichnet, dass**
das Halteteil (4) in mechanischer Verbindung mit wenigstens einem Übertragungsteil (10), insbesondere Hebel (11), steht und die Haltekraft an dem Halteteil (4) auf das Übertragungsteil (10) wirkt, so dass mittels einer Bewegung, insbesondere Schwenkbewegung, des Übertragungsteils (10), insbesondere des Hebels (11), das elastische Element (7) verformbar ist.

6. Auszugstester nach Anspruch 4 oder 5,
**dadurch gekennzeichnet, dass**
das Halteteil (4) mit dem wenigstens einen Übertragungsteil (10) mit wenigstens einem Verbindungsteil (13), insbesondere zwei Verbindungsarmen (14), mechanisch verbunden ist, so dass die Auszugkraft von dem Halteteil (4) auf das Übertragungsteil (10) mit dem wenigstens einen Verbindungsteil (13) übertragbar ist und/oder
das Übertragungsteil (10) und/oder das Verbindungsteil (13) das wenigstens ein Mittel (9) zum Übertragen einer auf den Setzbolzen (3) wirkenden Auszugkraft auf das elastische Element (7) bildet.

7. Auszugstester nach einem oder mehreren der Ansprüche 1 bis 3, **dadurch gekennzeichnet, dass**
das Halteteil (4) das elastische Element (7) bildet und/oder das Halteteil (4) das wenigstens eine Mittel (9) zum Übertragen einer auf den Setzbolzen (3 wirkenden Auszugkraft auf das elastische Element (7) bildet
und/oder
das Halteteil (4) als ein im Wesentlichen U-förmiger Halteclip (6) ausgebildet ist.

8. Auszugstester nach Anspruch 7,
**dadurch gekennzeichnet, dass**
an dem übrigen Auszugstester (1) eine Formschlussgeometrie (21), insbesondere ein Vorsprung (22) oder eine Nut, ausgebildet ist an welcher das Halteteil (4) formschlüssig befestigt ist und bei einem Überschreiten einer auf das Halteteil (4) wirkenden Auszugstestkraft die formschlüssige Verbindung zwischen dem Halteteil (4) und der Formschlussgeometrie (21) lösbar ist aufgrund einer im Wesentlichen elastischen Verformung des Halteteils (4) als elastisches Element (7), insbesondere aufgrund der Geometrie des Halteteils (4).

9. Setzgerät (2), umfassend
- ein Gehäuse (24),
- eine Einrichtung, z. B. einen Schlagbolzen mit einem Antriebsmittel, vorzugsweise eine pyrotechnische Treibladung, für den Schlagbolzen, zum Einbringen eines Setzbolzens (3) in einen Setzgegenstand (18),
- ein Betätigungsorgan, z. B. einen Schalter, zum Aktivieren der Einrichtung, insbesondere des Antriebsmittels,
**dadurch gekennzeichnet, dass**
das Setzgerät (2) einen Auszugstester (1) gemäß einem oder mehreren der vorhergehenden Ansprüche umfasst, insbesondere der Auszugstester (1) an dem übrigen Setzgerät (2) angebaut oder integriert ist
und/oder
ein Verfahren gemäß einem oder mehreren der Ansprüche 10 bis 15 ausführbar ist.

10. Verfahren zum Setzen eines Setzbolzens (3) in einen Setzgegenstand (18), insbesondere mit einem Setzgerät (2) gemäß Anspruch 9, mit den Schritten:
- Setzen des Setzbolzens (3) in den Setzgegenstand (18), z. B. eine Betondecke (19),
- Aufbringen einer Auszugstestkraft auf den Setzbolzen (3) und die Auszugstestkraft auf ein elastisches Element (7) übertragen wird, so dass das elastische Element (7) elastisch vorformt wird,
wobei
aufgrund der elastischen Verformung, insbesondere im Wesentlichen elastischen Verformung, des elastischen Elementes (7) eine mittelbare oder unmittelbare Verbindung, insbesondere formschlüssige und/oder kraftschlüssige Verbindung, zwischen dem Setzbolzen (3) und dem Setzgerät (2) bei dem Überschreiten der auf den Setzbolzen (3) wirkenden Auszugstestkraft gelöst wird.

11. Verfahren nach Anspruch 10,
**dadurch gekennzeichnet, dass**
bei einer auf den Setzbolzen (3) wirkenden Auszugkraft unterhalb der Auszugstestkraft die Verbindung zwischen den Setzbolzen (3) und dem Setzgerät (2) erhalten wird.

12. Verfahren nach Anspruch 10 oder 11,
**dadurch gekennzeichnet, dass**
nach dem Lösen der Verbindung zwischen dem Setzbolzen (3) und dem Setzgerät (2) von dem elastischen Element (7) eine im Wesentlichen vollständige elastische Rückverformung ausgeführt wird und/oder
das elastische Element (7) im Wesentlichen elastisch, insbesondere zu wenigstens 80%, 90% oder 95% elastisch, verformt wird und/oder
an dem elastischen Element (7) im Wesentlichen keine plastische Verformung ausgeführt wird.

13. Verfahren nach einem oder mehreren der Ansprüche 10 bis 12,
**dadurch gekennzeichnet, dass**
als elastisches Element (7) eine Feder, insbesondere Drehfeder (8), verformt wird und vorzugsweise die Feder wenigstens teilweise, insbesondere vollständig, aus Metall besteht.

14. Verfahren nach einem oder mehreren der Ansprüche 10 bis 13,
**dadurch gekennzeichnet, dass**
die Auszugstestkraft von einem Halteteil (4) mittelbar oder unmittelbar auf ein Übertragungsteil (10), insbesondere einen Hebel (11), übertragen wird, so dass das Übertragungsteil (10) bewegt, insbesondere der Hebel (11) verschwenkt wird.

15. Verfahren nach Anspruch 14,
**dadurch gekennzeichnet, dass**
das Übertragungsteil (10) mit dem elastischen Element (7), insbesondere der Drehfeder (8), mechanisch verbunden ist, so dass aufgrund der Bewegung, insbesondere Verschwenkung, des Übertragungsteils (10) das elastische Element (7) elastisch verformt wird.

## Claims

1. A pull-out tester (1) for a setting tool (2) for setting a powder-actuated fastener (3), said pull-out tester (1) comprising:
- a holding portion (4) for holding the powder-actuated fastener (3),
- an elastic element (7),
- at least one means (9) for transmitting a pull-out force acting on the fastener (3) to the elastic element (7),
**characterized in that**
when a pull-out test force acting on the powder-actuated fastener (3) is exceeded, the connection between fastener (3) and pull-out tester (1) can be broken owing to a deformation of the elastic element (7),
wherein the force transmitted to the elastic element (7) for deformation of the elastic element (7) substantially produces an elastic deformation of said elastic element (7) and, owing to the substantially elastic deformation of the elastic element (7), the connection between powder-actuated fastener (3) and pull-out tester (1) can be broken.

2. A pull-out tester according to Claim 1,
**characterized in that**
the elastic element (7) is formed such that the deformation of said elastic element (7) is at least 80%, 90% and 95% an elastic deformation.

3. A pull-out tester according to Claim 1 or 2,
**characterized in that**
the elastic element (7) is made at least partly, and in particular completely, of metal.

4. A pull-out tester according to one or more of the preceding claims,
**characterized in that**
the elastic element (7) is a spring, more specifically a torsion spring (8),
and/or
the holding portion (4) is a holding sleeve (5).

5. A pull-out tester according to one or more of the preceding claims,
**characterized in that**
the holding portion (4) is mechanically connected to at least one transmission portion (10), in particular a lever (11), and the holding force at the holding portion (4) acts on the transmission portion (10) so that the elastic element (7) can be deformed by means of a movement, in particular a swivelling movement, of the transmission portion (10), in particular of the lever (11).

6. A pull-out tester according to Claim 4 or 5,
**characterized in that**
the holding portion (4) is mechanically connected to the at least one transmission portion (10) by at least one connecting part (13), in particular two connecting arms (14), so that the pull-out force can be transmitted from the holding portion (4) to the transmission portion (10) by the at least one connecting part (13)
and/or
the transmission portion (10) and/or the connecting part (13) forms the at least one means (9) for transmitting a pull-out force acting on the powder-actuated fastener (3) to the elastic element (7).

7. A pull-out tester according to one or more of Claims 1 to 3,
**characterized in that**
the holding portion (4) forms the elastic element (7) and/or the holding portion (4) forms the at least one means (9) for transmitting a pull-out force acting on the powder-actuated fastener (3) to the elastic element (7)
and/or
the holding portion (4) takes the form of an essentially U-shaped holding clip (6).

8. A pull-out tester according to Claim 7,
**characterized in that**
the remaining part of the pull-out tester (1) has a form-locking geometry (21), in particular taking the form of a projection (22) or groove, to which the holding portion (4) is fixed with a form fit and, when a pull-out test force acting on the holding portion (4) is exceeded, the form-locking connection between holding portion (4) and form-locking geometry (21) can be broken owing to an essentially elastic deformation of the holding portion (4) as elastic element (7), and in particular owing to the geometry of the holding portion (4).

9. A setting tool (2), comprising:
- a housing (24),
- a mechanism, e.g. a firing pin with driving means, preferably a pyrotechnical propellant charge, for the firing pin, for installing a powder-actuated fastener (3) in a base material (18),
- an actuating device, for example a switch, for activating the mechanism, in particular for activating the driving means,
**characterized in that**
the setting tool (2) includes a pull-out tester (1) according to one or more of the preceding claims, and in particular the pull-out tester (1) is attached to, or incorporated in, the remaining part of the setting tool (2)
and/or
a method according to one or more of Claims 10 to 15 can be carried out.

10. A method of setting a powder-actuated fastener (3) in a base material (18), in particular using a setting tool (2) according to Claim 9, said method comprising the following steps:
- setting the powder-actuated fastener (3) in the base material (18), for example in a concrete ceiling (19),
- applying a pull-out test force to the powder-actuated fastener (3), the pull-out test force being transmitted to an elastic element (7) so that the elastic element (7) is elastically deformed,
wherein
when the pull-out test force acting on the powder-actuated fastener (3) is exceeded, an indirect or direct connection, more specifically a form-locking and/or frictional connection, between powder-actuated fastener (3) and setting tool (2) is broken owing to the elastic deformation, more particularly the substantially elastic deformation, of the elastic element (7).

11. A method according to Claim 10,
**characterized in that**
when a pull-out force acting on the powder-actuated fastener (3) is below the pull-out test force, the connection between powder-actuated fastener (3) and setting tool (2) is maintained.

12. A method according to Claim 10 or 11,
**characterized in that**
after the connection between the powder-actuated fastener (3) and the setting tool (2) has been broken by the elastic element (7), there is a substantially complete elastic recovery of its original shape
and/or
the elastic element (7) is essentially elastically deformed, in particular it is at least 80%, 90% or 95% elastically deformed
and/or
there is essentially no plastic deformation of the elastic element (7).

13. A method according to one or more of Claims 10 to 12,
**characterized in that**
a spring, more specifically a torsion spring (8), as elastic element (7), is deformed and preferably the spring is made at least partly, and in particular completely, of metal.

14. A method according to one or more of Claims 10 to 13,
**characterized in that**
the pull-out test force is indirectly or directly transmitted from a holding portion (4) to a transmission portion (10), in particular to a lever (11), so that the transmission portion (10) is moved, and in particular the lever (11) is swivelled.

15. A method according to Claim 14,
**characterized in that**
the transmission portion (10) is mechanically connected to the elastic element (7), or more specifically to the torsion spring (8), so that the elastic element (7) is elastically deformed owing to the movement, in particular swivelling movement, of the transmission portion (10).

## Revendications

1. Dispositif d'essai d'extraction (1) pour un appareil de scellement (2) destiné à sceller une cheville de scellement (3), comportant :
- une partie de retenue (4) pour retenir la cheville de scellement (3),
- un élément élastique (7),
- au moins un moyen (9) pour transmettre à l'élément élastique (7) une force d'extraction agissant sur la cheville de scellement (3),
**caractérisé en ce que** lorsqu'une force de test d'extraction agissant sur la cheville de scellement (3) est dépassée en raison d'une déformation de l'élément élastique (7), la liaison entre la cheville de scellement (3) et le dispositif d'essai d'extraction (1) peut être supprimée,
dans lequel la force transmise à l'élément élastique (7) pour déformer l'élément élastique (7) entraîne une déformation sensiblement élastique de l'élément élastique (7) et la liaison entre la cheville de scellement (3) et le dispositif d'essai d'extraction (1) peut être supprimée en raison de la déformation sensiblement élastique de l'élément élastique (7).

2. Dispositif d'essai d'extraction selon la revendication 1,
**caractérisé en ce que**
l'élément élastique (7) est formé de telle sorte que la déformation de l'élément élastique (7) est une déformation élastique jusqu'à au moins 80 %, 90 % et 95 %.

3. Dispositif d'essai d'extraction selon la revendication 1 ou 2,
**caractérisé en ce que**
l'élément élastique (7) est constitué au moins en partie, en particulier entièrement, de métal.

4. Dispositif d'essai d'extraction selon une ou plusieurs des revendications précédentes,
**caractérisé en ce que**
l'élément élastique (7) est un ressort, en particulier un ressort de torsion (8)
et/ou
la partie de retenue (4) est une douille de retenue (5).

5. Dispositif d'essai d'extraction selon une ou plusieurs des revendications précédentes,
**caractérisé en ce que**
la partie de retenue (4) est en liaison mécanique avec au moins une partie de transmission (10), en particulier un levier (11), et la force de retenue sur la partie de retenue (4) agit sur la partie de transmission (10) de sorte qu'au moyen d'un mouvement, en particulier un mouvement de pivotement, de la partie de transmission (10), en particulier du levier (11), l'élément élastique (7) peut se déformer.

6. Dispositif d'essai d'extraction selon la revendication 4 ou 5,
**caractérisé en ce que**
la partie de retenue (4) est mécaniquement reliée à la au moins une partie de transmission (10) avec au moins une partie de liaison (13), en particulier deux bras de liaison (14), de telle sorte que la force d'extraction de la partie de retenue (4) peut être transmise à la partie de transmission (10) avec la au moins une partie de liaison (13)
et/ou
la partie de transmission (10) et/ou la partie de liaison (13) forme le au moins un moyen (9) pour transmettre à l'élément élastique (7) une force d'extraction agissant sur la cheville de scellement (3).

7. Dispositif d'essai d'extraction selon une ou plusieurs des revendications 1 à 3,
**caractérisé en ce que**
la partie de retenue (4) forme l'élément élastique (7) et/ou la partie de retenue (4) forme le au moins un moyen (9) pour transmettre à l'élément élastique (7) une force d'extraction agissant sur la cheville de scellement (3)
et/ou
la partie de retenue (4) est formée comme une pince de retenue sensiblement en forme de U (6).

8. Dispositif d'essai d'extraction selon la revendication 7,
**caractérisé en ce que**
sur le reste du dispositif d'essai d'extraction (1) est formée une géométrie à complémentarité de formes (21), en particulier une saillie (22) ou une rainure, sur laquelle la partie de retenue (4) est fixée par complémentarité de formes et lorsqu'une force de test d'extraction agissant sur la partie de retenue (4) est dépassée, la liaison par complémentarité de formes entre la partie de retenue (4) et la géométrie à complémentarité de formes (21) peut être supprimée en raison d'une déformation sensiblement élastique de la partie de retenue (4) agissant comme un élément élastique (7), en particulier en raison de la géométrie de la partie de retenue (4).

9. Appareil de scellement (2), comportant :
- un boîtier (24),
- un dispositif, par exemple un percuteur avec des moyens d'entraînement, de préférence une charge propulsive pyrotechnique, pour le percuteur, afin d'introduire une cheville de scellement (3) dans un objet à sceller (18),
- un organe d'actionnement, par exemple un commutateur, pour activer le dispositif, en particulier les moyens d'entraînement,
**caractérisé en ce que**
l'appareil de scellement (2) inclut un dispositif d'essai d'extraction (1) selon une ou plusieurs des revendications précédentes, en particulier le dispositif d'essai d'extraction (1) est fixé sur le reste de l'appareil de scellement (2) ou est intégré dans celui-ci
et/ou
un procédé selon une ou plusieurs des revendications 10 à 15 peut être mis en oeuvre.

10. Procédé pour sceller une cheville de scellement (3) dans un objet à sceller (18), en particulier avec un appareil de scellement (2) selon la revendication 9, comportant les étapes suivantes consistant à :
- sceller la cheville de scellement (3) dans l'objet à sceller (18), par exemple un plancher en béton (19),
- appliquer une force de test d'extraction sur la cheville de scellement (3) et transmettre la force de test d'extraction à un élément élastique (7) de telle sorte que l'élément élastique (7) se déforme élastiquement,
dans lequel
du fait de la déformation élastique, en particulier une déformation sensiblement élastique, de l'élément élastique (7), une liaison directe ou indirecte, en particulier une liaison par complémentarité de formes et/ou un assemblage à force, entre la cheville de scellement (3) et l'appareil de scellement (2) est supprimée lorsque la force de test d'extraction agissant sur la cheville de scellement (3) est supprimée.

11. Procédé selon la revendication 10,
**caractérisé en ce que**
lorsqu'une force d'extraction agissant sur la cheville de scellement (3) est inférieure à la force de test d'extraction, la liaison entre la cheville de scellement (3) et l'appareil de scellement (2) est maintenue.

12. Procédé selon la revendication 10 ou 11,
**caractérisé en ce que**
après la suppression de la liaison entre la cheville de scellement (2) et l'appareil de scellement (3) par l'élément élastique (7), une déformation inverse pratiquement entièrement élastique a lieu
et/ou
l'élément élastique (7) est déformé de manière sensiblement élastique, en particulier de manière élastique jusqu'à au moins 80 %, 90 % ou 95 %
et/ou
pratiquement aucune déformation plastique n'a lieu sur l'élément élastique (7).

13. Procédé selon une ou plusieurs des revendications 10 à 12,
**caractérisé en ce que**
un ressort, en particulier un ressort de torsion (8) agissant comme l'élément élastique (7) est déformé et le ressort est de préférence constitué au moins en partie, en particulier entièrement, de métal.

14. Procédé selon une ou plusieurs des revendications 10 à 13,
**caractérisé en ce que**
la force de test d'extraction d'une partie de retenue (4) est transmise directement ou indirectement à une partie de transmission (10), en particulier un levier (11), de telle sorte que la partie de transmission (10) se déplace, en particulier le levier (11) pivote.

15. Procédé selon la revendication 14,
**caractérisé en ce que**
la partie de transmission (10) est mécaniquement reliée à l'élément élastique (7), en particulier au ressort de torsion (8), de telle sorte que l'élément élastique (7) est déformé élastiquement en raison du mouvement, en particulier un pivotement, de la partie de transmission (10).
